**Europäisches Patentamt**

**European Patent Office**

**Office européen des brevets**

(19)

(11) Publication number: 0 076 366
B1

(12) # EUROPEAN PATENT SPECIFICATION

(45) Date of publication of patent specification: **02.09.87**

(21) Application number: **82106584.4**

(22) Date of filing: **21.07.82**

(51) Int. Cl.⁴: **B 29 C 47/06,** B 32 B 27/00,
B 65 D 1/02, B 29 D 23/00

(54) **Multilayer tubular body with uncentered barrier layer.**

(30) Priority: **05.10.81 US 308292**

(43) Date of publication of application:
**13.04.83 Bulletin 83/15**

(45) Publication of the grant of the patent:
**02.09.87 Bulletin 87/36**

(84) Designated Contracting States:
**AT BE CH DE FR GB IT LI LU NL SE**

(56) References cited:
**FR-A-1 436 158**
**US-A-3 321 803**
**US-A-3 449 579**
**US-A-3 640 659**
**US-A-4 082 829**
**US-A-4 109 037**
**US-A-4 217 161**

(73) Proprietor: **BALL CORPORATION**
**345 South High Street**
**Muncie Indiana 47302 (US)**

(72) Inventor: **Dugal, Jeffrey Noel**
**1024 Eden Court**
**Evansville Indiana 47715 (US)**

(74) Representative: **Kraus, Walter, Dr. et al**
**Patentanwälte Kraus, Weisert & Partner**
**Thomas-Wimmer-Ring 15**
**D-8000 München 22 (DE)**

Courier Press, Leamington Spa, England.

## 0 076 366

**Description**

This invention relates to a nonflexible thick-walled tubular article capable of being biaxially oriented into a container possessing low gas permeability comprising at least three polymeric layers of which at least one is an intermediate polymeric layer being a barrier layer, this article being formed by simultaneously coextruding the polymeric layers together as a series of melted streams with the barrier layer being within the exterior one percent to 33 percent of the total thickness of the article and having an average thickness in the range of about 1 percent to about 20 percent of the total thickness of the article. Furthermore, the invention relates to a method for making such article which is suitable for producing containers and the like.

The formation of multilayered structures is known wherein the separate layers contribute to the final properties. Many of these composite structures may be readily prepared by melting each individual component in separate zones and subsequently combining them in a predetermined configuration. In general, composite structures of two or more different polymeric materials may be readily coextruded to form a multilayered structure. In particular, a multilayered tubular structure may be readily made by conventional coextrusion processes wherein each thermoplastic material which is ultimately to form a layer in the composite is separately heated to its melt extrusion temperature by a conventional melt extruder and thereafter each melted material is forced by pressure feeding means into streams of melted thermoplastic material that enter a multimanifold die device provided with toroidal chambers and a common annular die orifice. The melted materials are fed into said device and form therein continuous annular layers as they exit the die orifice, each additional layer being fed to the device and issuing as annular coaxial layers that are essentially concentric with the initially formed annular layer. In effect the device provides an annular flow of plastic materials, one strata of thermoplastic material being circumferentially deposited upon the preceding one to produce the multilayered tubular body.

In distributing thermoplastic materials into a multimanifold die device it has been found that several polymeric materials have the tendency to decompose or degrade when subjected to certain elevated temperatures, the elevated temperatures being reached oftentimes by heat from an adjacent coextruded material that must be processed at a higher melt extrusion temperature. Several polymers exhibit this tendency and, especially, prone are the so-called low gas permeable polymers. These rather susceptible polymeric materials when subjected to elevated temperature have the propensity to partially degrade or decompose whereby unwanted gaseous products or inclusions are formed that become entrapped and are embedded in the polymeric interlayers or matrix. These inclusions often serve as nuclei or sites of buildup for the ultimate deposition of various organic and inorganic substances in a finished article. In particular, this deposition is noticeable with tubular forms and, especially, when they are further processed via blow-molding to form necked containers.

A number of patents disclose methods of making tubular, multilayered structures as well as methods of blow-molding certain thermoplastic structures. For example, a method of coextruding multilayered tubular bodies is described in US—A—3 308 508 as well as in US—A—3 354 506. Multilayered, flexible structures having at least one layer of low gas permeability are described in US—A—3 570 748 and US—A—3 956 544 as well as in US—A—4 139 665. Also rigid multilayered sheet structures are shown in US—A—3 645 838 and US—A—4 182 457. A useful process for blow-molding tubular bodies or parisons into high strength transparent hollow objects including containers is described in US Reissue Patent 26 956.

A nonflexible thick-walled tubular article of the type mentioned in the beginning and a method for making such article is described in FR—A—1 436 158. However, there is no indication of the above problem of unwanted gaseous products or inclusions in this patent. The purpose why the barrier layer is arranged closer to the outside than to the inside of the tube according to FR—A—1 436 158 is to form first a base tube and then to complete this base tube by thin cover layers which are obviously added from outside because it is easier to do so than to add them from inside. This is a problem completely different from the above problem underlying the present invention.

US—A—4 082 829 discloses a method for making a three-ply film containing a barrier layer as inner layer between two outer layers. In this method the film is produced in tubular form by making the first layer as an inflated tubing of greater wall thickness and cooling and quenching the same. Thereafter the other layers are coated one after the other on the first layer. It is clear that the purpose of making the first layer thicker than the second and third layers is to obtain a relatively stable tubing as base tubing for coating the same with the remaining layers similar as in FR—A—1 436 158.

Furthermore, US—A—4 217 161 discloses a transparent multi-layer container comprising a co-extrudate of an oxygen-barrier resin layer and an orienting resin layer which is monoaxially or biaxially oriented, with an adhesive resin layer being preferably interposed between the oxygen-barrier layer and the orienting resin layer, and this co-extrudate is drawn and molded at a specific temperature determined relatively to the melting points and softening points of the respective resins. All parisons for making such containers disclosed in US—A—4 217 161 have a symmetric arrangement of layers with respect to the oxygen-barrier layer; that is, arrangements of layers in which the inner and outer layers are of equal thickness. However, the above-mentioned problem of unwanted gaseous products or inclusions is not

2

indicated in this patent. The object underlying this patent is rather to attain a practically satisfactory interlaminar peel strength under falling, shaking or impact.

The above problem of gas release caused by decomposition when extruding decomposable plastics materials such as vinylidene chloride is mentioned in US—A—3 321 803. However, the solution of this problem proposed in US—A—3 321 803 is to reduce the residence time of the plastic in the die to prevent undue heating of the plastic by use of a special extrusion die and thereby to inhibit the decomposition of the plastic material in the die.

Thus, the particular problems resolved by the subject invention have not been appreciated or squarely addressed by the prior art.

It was surprisingly found that the above problem of avoiding unwanted gaseous inclusions in a nonflexible thick-walled tubular article of the type mentioned in the beginning and in a method for making such tubular article is solved, according to the present invention, when the barrier layer is coextruded with at least one adjacent adhesive layer cojoined therewith to provide a marked decrease in relative volume of entrapped inclusions per given length.

Therefore, where potentially degradable polymeric materials are incorporated as a layer or layers in tubular structures in accordance with this invention there is a marked improvement in properties advantageous to further fabrication including a substantial reduction in the tendency to form organic or inorganic inclusions. In essence, the multilayered tubular structure of the subject invention is novel and provides for unique properties and improvements not only in gas permeability but also in the mechanical properties of containers formed from said tubular structures including bottom wall sealability and neck configuration, which in turn, enables them to be useful for many purposes in the art, especially for parisons in blow-molding containers as hereinafter set forth.

In this connection it should be mentioned that it has been found that in addition to the degradation or decomposition of these susceptible polymers there are apparently other phenomena at work that accentuate or cause a greater likelihood for this condition to exist, not only in frequency but in magnitude. Since there are a number of different polymeric materials that may be coextruded at the same time to form a given tubular body there is a marked tendency during any subsequent quenching or cooling for the various cojoined materials to contract or shrink at different levels resulting in stresses within the tubular structure. These stresses appear somehow to accelerate the formation of gaseous inclusions or bubbles that apparently display themselves. Seemingly, the differential contraction between the faster cooling outer layer where generally less shrinkage occurs and the slower cooling inner layer where generally more shrinkage occurs accelerates the buildup of these inclusions.

According to the invention there is provided a tubular article and a method of making the same wherein the degradation of the barrier layer polymer material being highly susceptible to thermal degradation is substantially reduced.

Furthermore, the invention provides a composite tubular article having excellent mechanical strength.

Still, this invention provides a tubular article having at least one barrier layer that is substantially free of organic and/or inorganic inclusions.

Yet the invention provides an improved tubular article for blow-molding into hollow objects, the objects having good sealability characteristics.

Moreover, the invention minimizes or reduces the effect of differential shrinkage for a multilayered tubular article having a susceptible barrier layer.

Additionally the invention provides a method for making a tubular article capable of allowing the manufacture of various types of containers having enhanced properties, including particularly low gas permeability, as well as containers having improved bottom wall sealability and neck-finish configuration.

It is preferred that the barrier layer has an average thickness of from about 2 percent to about 12 percent of the total thickness of the article, particularly that the barrier layer has an average thickness of from about 3 percent to about 10 percent of the total thickness of the article.

Other embodiments of the invention are stated in the dependent claims 2 to 4, 7, 9 to 11 and 14, 15.

In one embodiment of the present invention, briefly summarized, there is provided a self-supporting, coextruded thermoplastic article comprising a plurality of layers of different polymeric materials bonded together, said article having at least one uncentered layer of low gas permeability situated proximate the surface of said article. The particular article herein contemplated includes a tubular parison structure whereby the uncentered layer of low gas permeability is the penultimate polymeric layer or one proximate the outer surface of said tubular parison structure. The article thickness being between about 2.54 to 12.7 mm with the barrier layer being between about 0.0254 to about 2.54 mm.

The nature, principle, utility and further particularities of this invention will be apparent from the following detailed description including specific examples of practice illustrating preferred embodiments of the invention.

In the drawings:

Figure 1 is a perspective view of the tubular body of this invention;

Figures 2 and 3 illustrate fragmentary cross sections of composite thermoplastic bodies of the subject invention;

Figure 4 is a cross-sectional view of a multimanifold die assembly for making the article of this invention;

Figure 5 is a view of a narrow neck container made from the tubular body of this invention; and

Figure 6 depicts a schematic representation of the apparatus for forming containers like Figure 5 from tubular bodies of this invention.

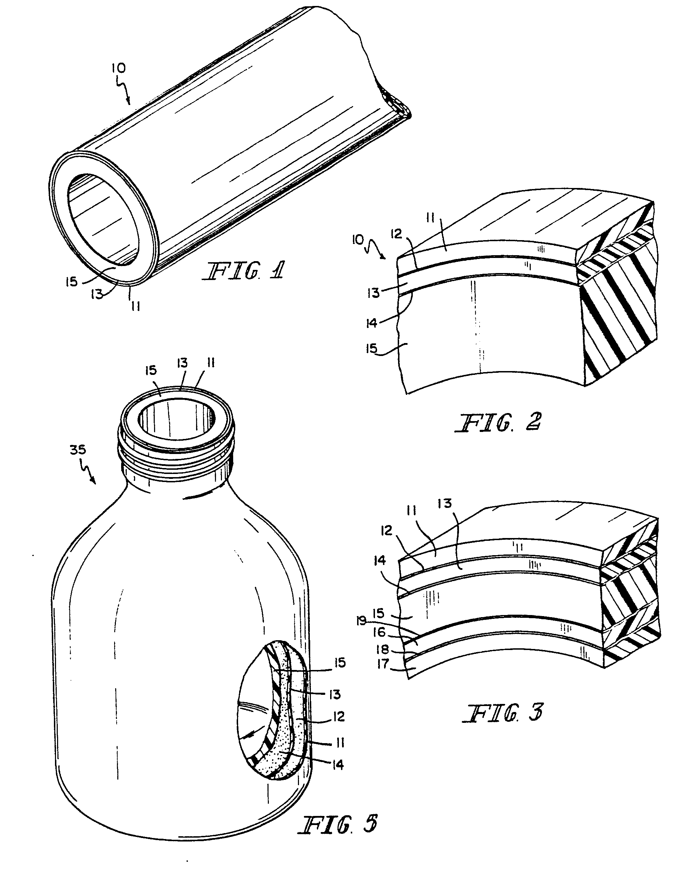

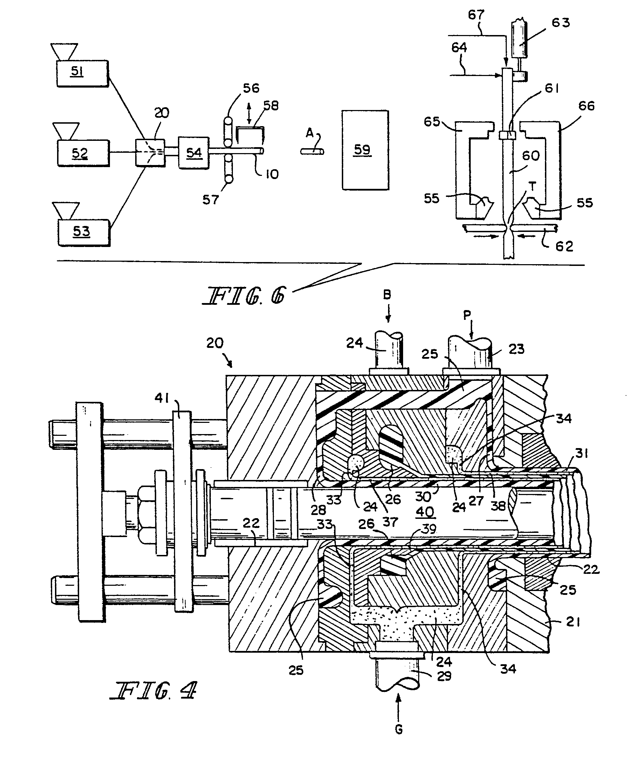

Turning first to Figures 1, 2 and 3 a sectional view of several rigid coextruded thermoplastic bodies are shown, each body itself being designated generally by reference numeral 10. The body 10 comprises a first or outer polymeric material 11 bonded by a first glue layer 12 to a so-called unbalanced or uncentered inner layer 13 which in turn is bonded to a second or inner polymeric material 15 by a second glue layer 14. As can be seen in Figure 3, the inner polymeric material may comprise different polymeric materials such as shown by layers 15, 16 and 17 with inner glue layers 18 and 19. As disclosed herein, it has been found that such rigid structures render very favorable biaxially oriented containers or drawn-molded containers, which have a high barrier property to gases such as oxygen and are excellent in transparency, rigidity, mechanical strength and other physical properties.

In particular, the multilayered structure of the subject invention comprises a tubular thermoplastic body having a barrier layer sandwiched between other thermoplastic materials, with a glue or adhesive resin layer interposed between said thermoplastic layers, the barrier layer being proximate the exterior surface of said structure. When the barrier layer is so situated, it has been observed that there is less tendency for its decomposition or degradation and the formation of organic or inorganic inclusions which become oftentimes entrapped in the polymeric matrix during formation of a coextruded tubular structure. In the case of halogen-containing polymers the inclusions may often be hydrogen halides. Admittedly, when a tubular structure of polymeric material such as a single polymeric material or monolithic parison of polypropylene undergoes biaxial orientation during a stretch-and-blow operation the resulting article exhibits high strength as well as clarity. However, when such orientation is attempted with a multilayered tubular parison having a barrier layer or one of low gas permeability, it is found that the location of such a layer in a given multilayered parison in relation to the other layers becomes exceedingly critical in order to produce a container free or substantially free of imperfections or flaws due to such inclusions.

In general, it has been found that the low gas permeable or barrier layer should be positioned away from the central plane of the sheet or tubular structure and is most preferably located towards the exterior portion, especially within the first one-third of layers of a given multilayered preform structure. In this regard the barrier layer is best located proximate the outer surface of the structure, being within about 1 percent to 33 percent of the total thickness and the barrier layer itself occupying from about 1 percent to 20 percent of said total thickness. In one embodiment the barrier layer may have a thickness substantially equal to the thickness of the first outer thermoplastic layer. In a most preferred embodiment the barrier layer should be situated within the outer $15 \pm 1$ percent of the total thickness of the tubular body. Figures 2 and 3 show one position of the barrier layer 13 and its relative thicknesses to the other layers within a given multilayered tubular body.

A wide range of thermoplastic materials, and preferably orientable materials, may be used for the polymeric layers, that is, for those polymeric layers other than the at least one barrier layer of low gas permeability. In particular, the thermoplastic materials include the solid olefins such as polyethylene, polypropylene and polybutylene. The polyolefins herein contemplated include polyethylene, polypropylene, resinous copolymers of ethylene and propylene and polymers of ethylene and/or propylene with minor proportions of olefinically unsaturated monomers such as the low molecular weight olefins having, for example, from 2 to 8 carbon atoms such as 1-butene, 1-pentene, 1-hexene, 1-heptene, and 1-octene. Other hydrocarbons useful for the copolymers herein are the copolymers of ethylene and propylene include divinylbenzene, allene, dimethallyl and isopentene. Also included in the thermoplastic materials for the layers that are not the barrier layer are polystyrene, polymethacrylates including polymethyl methacrylate and polybutyl methacrylate; polyvinyl alcohols; polyvinyl halides; polyvinyl acetals including polyvinyl trityral, polyallyl alcohol and polyallyl acetate; polyesters including polyethylene terephthalate and polycarbornates.

The term low gas permeability layer or barrier layer as used herein include polyvinylidene chloride and its copolymers; polyacrylonitrite and its copolymers including poly(acrylonitrile-co-styrene-co-butadiene); polyamides such as nylon; and hydrolized polymers of vinyl acetate and ethylene, especially saponified copolymers thereof. In general, the term polyvinylidene chloride copolymers as used herein mean a polymeric material which contains at least 50 percent of vinylidene chloride. A preferred barrier layer in accordance with this invention is polyvinylidene chloride and its copolymers. Copolymerizable monomers with vinylidene chloride include vinyl chloride, butadiene, acrylonitrile, vinyl acetate, methyl acrylate, ethyl acrylate, butyl acrylate, and methyl methacrylate. Terpolymers can also be employed, e.g., a terpolymer of vinylidene chloride, methyl methacrylate and vinyl chloride.

A relatively wide range of polymers and polymeric compositions are useful to increase the adhesion between the various thermoplastic layers as well as between the thermoplastic layers and the barrier layer. In making the tubular structures herein contemplated it is found most desirable to add adhesive or bonding layers between the barrier layer and the other thermoplastic layers. This has many advantages including the prevention of entrapping air in the coextruded material. In selecting adhering materials to serve as glue with respect to bonding polypropylene to vinylidene chloride polymers, a number of compositions may be used: compositions which are particularly advantageous are copolymers containing about 13 weight percent to about 35 weight percent vinyl acetate with from about 87 weight percent to about 65 weight percent ethylene, copolymer compositions of from about 20 to 30 weight percent ethyl acrylate with from about 80 to 70 weight percent ethylene, copolymer compositions from about 20 to 30 weight percent isobutyl acrylate with from about 80 to 70 weight percent of ethylene and chlorinated polyethylene containing from about 25 to 40 weight percent chlorine and copolymers of butadiene-styrene. Suitable polymers or polymeric compositions may be readily selected by determining the bonding strength of the particular layer combination, usually by using peel strength tests.

In Figure 4 there is illustrated a sectional view of a multimanifold die device useful in forming the subject article, said device being generally designated by the reference numeral 20, the device 20 comprising a die body 21 having defined therein a centrally disposed aperture 22. Located within aperture 22 is a mandrel 40 equally spaced from the walls of the aperture 22 and secured to the device 20 by retaining member 41. Formed within the body 21 is first and second conduits 23 and 24 which carry melted thermoplastic and barrier materials P and B, respectively, into first and second plenums 25 and 26. Thermoplastic material P is divided into two streams that open into aperture 22, an inner stream 30 and an outer stream 31, said streams issuing from annular slots 28 and 27 that communicate with the plenum 25. A conduit 29 communicates with a third plenum 24 for directing a suitable adhesive or glue material G. From viewing Figure 4 it will be noted that the glue material G forms two streams, an inner stream 37 and an outer stream 38, said streams coming from glue slots 33 and 34. Thus, the barrier material B is carried within the die body 21 by plenum 26 which, in turn, communicates with the aperture 22 by means of barrier slot 39. It will be appreciated that a number of die configurations may be used to form the article herein, the aforementioned being just one embodiment.

The formation of a biaxially oriented container shall now be described. With reference to Figure 6 there is shown a tubular structure 10 being formed by passing molten thermoplastic materials from three separate conventional screw-type extruders 51, 52 and 53 which contain thermoplastic material, glue, and barrier material, respectively, to the multimanifold die device 20 where melted thermoplastic materials are united into the tubular body 10 as previously described and, thereafter, the molten materials are allowed to pass into a vacuum cooling and sizing chamber 54. It will be appreciated that some materials are required to be at an elevated melt temperature, such as for polypropylene, in comparison with another material such as a low gas permeable layer, and the time required to substantially cool the former material may not be ample whereby there results degradation or decomposition of the low gas permeable material. In the case of polyvinylidene chloride and its copolymers as a low gas permeable layer it is believed that inorganic materials such as hydrogen chloride may be formed as well as other organic ingredients. It follows from this invention that the thermally sensitive barrier or low gas permeable layer is situated in the multilayered structure proximate the outer surface as defined herein whereby it may be quenched or cooled quickly. Furthermore, this particular location of the barrier layer, that is proximate the outer surface, also reduces the forces due to the differential shrinkage of the inner and outer layers and, therefore, further curtails the tendency of the gaseous inclusions to form. As a result, the formation of gaseous inclusions is substantially reduced in making such multilayered tubular bodies in accordance with this invention.

After being cooled the solidified tubular body is pushed via belts 56 and 57 into cutting means 58 where it is severed into individual open end parison preforms designed A. Thereafter, the preform A is passed through an air oven 59 where it is heated to a predetermined orientation temperature and the preform is then transferred by means not shown to a thread-forming head 61 whereby the thread and finish configuration is readily formed. The parison A is grasped at the other end thereof by gripping fingers 62, which are brought together by means of cylinders or cams not shown, and relative movement effected between thread-forming head 61 and gripping fingers 62 by means of raising head 61 through the action of cylinder 63 to stretch the parison to the elongated condition depicted by reference character 60. Thereafter, preblow air is introduced through line 64 and mold halves 65 and 66 concurrently close on the thus-stretched parison 60. Sealing and severing inserts 55 in mold halves 65 and 66 allow the mechanical operation of bringing the parison walls into intimate contact and severing the parison. It will be appreciated that since the innermost portion of the multilayered structure is substantially one polymeric material, e.g., polypropylene, that this action brings together a larger area of common polymeric material which readily seals itself to form the bottom end wall. It has been observed that if a low gas permeable layer is proximate the inner wall, as opposed to the outer wall, proper sealing does not take place due in part, to its inherent characteristics of being readily squeezable from the seal and the less amount of area between joining common polymeric materials. At any rate, gripping fingers 62 then retract to allow the severed tail portion T to fall free from the remainder of the parison. Thereafter, the main blow air is then introduced through line 67. By this process the preform is biaxially stretched. A preferred method of closing and sealing a comparable parison, for instance, is shown and described in U.S. Patent No. 3,686,379 to Gilbert, the disclosure of which is hereby incorporated by reference.

The following example is presented in order to illustrate further the particular tubular structure and method to form the same in accordance with this invention.

A series of coextruded tubular bodies, A through E, were made in which a layer having low gas permeability was positioned at various levels within the layered structure. In making these tubular bodies three separate extruders were used in a coextrusion line, the first (1) extruder hopper containing polypropylene copolymer having a density of about 0.90 and a crystalline melting point of about 165.56°C, the second (2) containing a copolymer of vinylidene chloride and vinyl chloride having a density of about 1.71 and a crystalline melting point of about 148.89°C; and the third (3) extruder containing a resinous, adhesive material comprising about 40 percent styrene and 60 percent butadiene. All three materials were melted and pumped by the extruders to a multimanifold die head wherein the three materials were coextruded to form continuous annular layers, each layer being fed to the die head and issuing as annular coaxial layers that were essentially concentric with the initially formed layer.

Each extruded tubular body thus formed had an outside diameter of about 31.75 mm and a wall thickness of about 5.842 mm. Each tubular body was cooled in a vacuum sizing and quenching chamber using a coolant at about 4.44°C, and thereafter cut into 254 mm lengths. In order to demonstrate the criticality of the location of the barrier layer, viz., a copolymer of vinylidene chloride (about 85 percent) and vinyl chloride (about 15 percent), five different placements were made. The barrier layer was bonded via the above-mentioned adhesive material to both an inner and an outer layer of polypropylene. The barrier material itself as well as the other materials were maintained substantially at the same quantitative level in each placement. The following table shows the distance the barrier was located from the outer surface and indicates the average number of inclusions per meter as well as the estimated average inclusion volume. By multiplying the average number of inclusions per meter and estimated average inclusion volume and dividing by the inclusion volume per meter of Sample A the relative inclusion volume per meter is determined.

TABLE

| Description | Samples | | | | |
|---|---|---|---|---|---|
| | A | B | C | D | E |
| 1. Average outer polypropylene+ glue layer thickness, mm | 0.5588 | 1.5748 | 2.5146 | 4.2672 | 4.6482 |
| 2. Average number of inclusions per meter | 5.25 | 34.12 | 86.61 | 38.06 | 125.98 |
| 3. Estimated average inclusion volume | 439 | 12800 | 31300 | 6800 | 531 |
| 4. Relative inclusion volume per meter | 3.28 | 623.36 | 3937.01 | 360.89 | 95.14 |

It can be seen from the above table that when the barrier layer is proximate the outer surface, that is, if the barrier layer is within the outer about one-third of the total thickness, or more preferably within the outer about one-quarter of the total thickness of the tubular body there is a marked decrease in the relative inclusion volume per foot.

As is apparent from the foregoing specification, the present invention is susceptible of being embodied with various alterations and modifications which may differ particularly from those that have been described in the preceding specification and description. For this reason, it is to be fully understood that all of the foregoing is intended to be merely illustrative and is not to be construed or interpreted as being restrictive or otherwise limiting of the present invention as claimed.

## Claims

1. A nonflexible thick-walled tubular article (10) capable of being biaxially oriented into a container (35) possessing low gas permeability comprising at least three polymeric layers (11, 13, 15, 16, 17) of which at least one is an intermediate polymeric layer being a barrier layer (13), said article (10) being formed by simultaneously coextruding said polymeric layers (11, 13, 15, 16, 17) together as a series of melted streams (30, 31) with said barrier layer (13) being within the exterior one percent to 33 percent of the total thickness of said article (10) and having an average thickness in the range of about 1 percent to about 20 percent of the total thickness of said article (10), characterized in that said barrier layer (13) is coextruded with at least one adjacent adhesive layer (12, 14) cojoined therewith to provide a marked decrease in relative volume of entrapped inclusions per given length.

2. The tubular article (10) of Claim 1, characterized in that said barrier layer (13) is selected from the group consisting of polyvinylidene chloride, polyvinylidene chloride copolymers, poly(vinyl alcohol-co-ethylene) and acrylonitrile-containing polymers.

3. The tubular article (10) of Claim 1 or 2, characterized in that said polymeric layers (11, 15, 16, 17) other than said barrier layer (13) are polymers selected from the group consisting of polyolefins, polystyrenes and polyesters.

4. The tubular article (10) of Claims 1 to 3, characterized in that said adhesive layer (12, 14) bonding a polyvinylidene chloride barrier layer (13) to a polypropylene layer (11, 15) is a composition selected from the group consisting of copolymers containing about 13 weight percent to about 35 weight percent vinyl acetate with from about 87 weight percent to about 65 weight percent ethylene, copolymer compositions of from about 20 to 30 weight percent ethyl acrylate with from about 80 to 70 weight percent ethylene, copolymer compositions from about 20 to 30 weight percent isobutyl acrylate with from about 80 to 70 weight percent of ethylene and chlorinated polyethylene containing from about 25 to 40 weight percent chlorine and copolymers of butadiene-styrene.

5. The tubular article (10) of Claim 1, 2 or 3, characterized in that said barrier layer (13) has an average thickness of from about 2 percent to about 12 percent of the total thickness of the article (10).

6. The tubular article (10) of Claim 1, 2 or 3, characterized in that said barrier layer (13) has an average thickness of from about 3 percent to about 10 percent of the total thickness of the article (10).

7. The tubular article (10) of Claim 1, 2 or 3, characterized in that said barrier layer (13) is within the outer about one-quarter total thickness of the article (10).

8. A method of making a nonflexible thick-walled tubular article (10) capable of being biaxially oriented into a container (35) possessing low gas permeability comprising at least three polymeric layers (11, 13, 15, 16, 17) of which at least one is an intermediate polymeric layer being a barrier layer (13), said article (10) being formed by simultaneously coextruding said polymeric layers (11, 13, 15, 16, 17) together as a series of melted streams (30, 31) with said barrier layer (13) being within the exterior one percent to 33 percent of the total thickness of said article (10) and having an average thickness in the range of about 1 percent to about 20 percent of the total thickness of said article (10), characterized in that said barrier layer (13) is coextruded with at least one adjacent adhesive layer (12, 14) cojoined therewith to provide a marked decrease in relative volume of entrapped inclusions per given length.

9. The method of Claim 8, characterized in that said barrier layer (13) is selected from the group consisting of polyvinylidene chloride, polyvinylidene chloride copolymers, poly(vinyl alcohol-co-ethylene) and acrylonitrile-containing polymers.

10. The method of Claim 8 or 9, characterized in that said polymeric layers (11, 15, 16, 17) other than said barrier layer (13) are polymers selected from the group consisting of polyolefins, polystyrenes and polyesters.

11. The method of Claims 8 to 10, characterized in that said adhesive layer (12, 14) bonding a polyvinylidene chloride barrier layer (13) to a polypropylene layer (11, 15) is a composition selected from the group consisting of copolymers containing about 13 weight percent to about 35 weight percent vinyl acetate with from about 87 weight percent to about 65 weight percent ethylene, copolymer compositions of from about 20 to 30 weight percent ethyl acrylate with from about 80 to 70 weight percent ethylene, copolymer compositions from about 20 to 30 weight percent isobutyl acrylate with from about 80 to 70 weight percent of ethylene and chlorinated polyethylene containing from about 25 to 40 weight percent chlorine and copolymers of butadiene-styrene.

12. The method of Claim 8, 9 or 10, characterized in that said barrier layer (13) has an average thickness of from about 2 percent to about 12 percent of the total thickness of the article (10).

13. The method of Claim 8, 9 or 10, characterized in that said barrier layer (13) has an average thickness of from about 3 percent to about 10 percent of the total thickness of the article (10).

14. The method of Claim 8, 9 or 10, characterized in that said barrier layer (13) is within the outer about one-quarter total thickness of the article (10).

15. The method of Claims 8 and 9, characterized by quenching said melted streams (30, 31) of thermoplastic material with said polyvinylidene chloride layer (13) at their exterior surface proximate said polyvinylidene layer (13) to further reduce the degradation of the polyvinylidene chloride and the formation of entrapped inclusions in the resulting tubular article (10).

**Patentansprüche**

1. Nichtflexibler dickwandiger rohrförmiger Gegenstand (10), der dazu geeignet ist, biaxial zu einem Behälter (35) gereckt zu werden, welcher eine niedrige Gasdurchlässigkeit besitzt, umfassend wenigstens drei Polymerschichten (11, 13, 15, 16, 17), von denen wenigstens eine eine Zwischenpolymerschicht ist, die eine Barrierenschicht (13) ist, wobei der Gegenstand (10) durch gleichzeitiges Koextrudieren der Polymerschichten (11, 13, 15, 16, 17) zusammen als eine Reihe von geschmolzenen Strömen (30, 31) ausgebildet wird, wobei die Barrierenschicht (13) innerhalb der äußeren ein Prozent bis 33 Prozent der Gesamtdicke des Gegenstands (10) ist und eine durchschnittliche Dicke im Bereich von etwa ein Prozent bis etwa 20 Prozent der Gesamtdicke des Gegenstands (10) hat, dadurch gekennzeichnet, daß die Barrierenschicht (13) mit wenigstens einer benachbarten Klebstoffschicht (12, 14), die damit koverbunden ist, koextrudiert ist, um eine ausgeprägte Verminderung im relativen Volumen von eingeschlossenen Einlagerungen pro gegebener Länge zu erzielen.

2. Rohrförmiger Gegenstand (10) nach Anspruch 1, dadurch gekennzeichnet, daß die Barrierenschicht (13) aus der aus Polyvinylidenchlorid, Polyvinylidenchloridcopolymeren, Poly(vinylalkohol-co-ethylen) und Acrylnitril enthaltenden Polymeren bestehenden Gruppe ausgewählt ist.

3. Rohrförmiger Gegenstand (10) nach Anspruch 1 oder 2, dadurch gekennzeichnet, daß die anderen Polymerschichten (11, 15, 16, 17), als es die Barrierenschicht (13) ist, Polymere sind, welche aus der aus Polyolefinen, Polystyrolen und Polyestern bestehenden Gruppe ausgewählt sind.

4. Rohrförmiger Gegenstand (10) nach den Ansprüchen 1 bis 3, dadurch gekennzeichnet, daß die Klebstoffschicht (12, 14), welche eine Polyvinylidenchloridbarrierenschicht (13) an eine Polypropylenschicht (11, 15) bindet, eine Zusammensetzung ist, die aus der Gruppe ausgewählt ist, welche besteht aus Copolymeren, die etwa 13 Gew.-% bis etwa 35 Gew.-% Vinylacetat mit von etwa 87 Gew.-% bis etwa 65 Gew.-% Ethylen enthalten, Copolymerzusammensetzungen von etwa 20 bis 30 Gew.-% Ethylacrylat mit von etwa 80 bis 70 Gew.-% Ethylen, Copolymerzusammensetzungen von etwa 20 bis 30 Gew.-% Isobutylacrylat mit von etwa 80 bis 70 Gew.-% Ethylen und chloriertes Polyethylen, das von etwa 25 bis 40 Gew.-% Chlor enthält, und Copolymere von Butadien-Styrol.

5. Rohrförmiger Gegenstand (10) nach Anspruch 1, 2 oder 3, dadurch gekennzeichnet, daß die Barrierenschicht (13) eine durchschnittliche Dicke von etwa 2 Prozent bis etwa 12 Prozent der Gesamtdicke des Gegenstands (10) hat.

6. Rohrförmiger Gegenstand (10) nach Anspruch 1, 2 oder 3, dadurch gekennzeichnet, daß die Barrierenschicht (13) eine durchschnittliche Dicke von etwa 3 Prozent bis etwa 10 Prozent der Gesamtdicke des Gegenstands (10) hat.

7. Rohrförmiger Gegenstand (10) nach Anspruch 1, 2 oder 3, dadurch gekennzeichnet, daß die Barrierenschicht (13) innerhalb der äußeren etwa ein viertel Dicke des Gegenstands (10) ist.

8. Verfahren zum Herstellen eines nichtflexiblen dickwandigen rohrförmigen Gegenstands (10), der dazu geeignet ist, biaxial zu einem Behälter (35) gereckt zu werden, welcher niedrige Gasdurchlässigkeit besitzt, umfaseend wenigstens drei Polymerschichten (11, 13, 15, 16, 17), von denen wenigstens eine eine Zwischenpolymerschicht ist, die eine Barrierenschicht (13) ist, wobei der Gegenstand (10) durch gleichzeitiges Koextrudieren der Polymerschichten (11, 13, 15, 16, 17) zusammen als eine Reihe von geschmolzenen Strömen (30, 31) ausgebildet wird, wobei die Barrierenschicht (13) innerhalb der äußeren ein Prozent bis 33 Prozent der Gesamtdicke des Gegenstands (10) ist und eine durchschnittliche Dicke in dem Bereich von etwa ein Prozent bis etwa 20 Prozent der Gesamtdicke des Gegenstands (10) hat, dadurch gekennzeichnet, daß die Barrierenschicht (13) mit wenigstens einer benachbarten Klebstoffschicht (12, 14), die damit koverbunden ist, koextrudiert ist, um eine ausgeprägte Abnahme im relativen Volumen von eingeschlossenen Einlagerungen pro gegebener Länge zu erzielen.

9. Verfahren nach Anspruch 8, dadurch gekennzeichnet, daß die Barrierenschicht (13) aus der aus Polyvinylidenchlorid, Polyvinylidenchloridcopolymeren, poly(vinylalkohol-co-ethylen)- und acrylnitrilenthaltenden Polymeren bestehenden Gruppe ausgewählt ist.

10. Verfahren nach Anspruch 8 oder 9, dadurch gekennzeichnet, daß die anderen Polymerschichten (11, 15, 16, 17), als es die Barrierenschicht (13) ist, Copolymere sind, die aus der aus Polyolefinen, Polystyrolen und Polyestern bestehenden Gruppe ausgewählt sind.

11. Verfahren nach den Ansprüchen 8 bis 10, dadurch gekennzeichnet, daß die Klebstoffschicht (12, 14), welche eine Polyvinylidenchloridbarrierenschicht (13) an eine Polypropylenschicht (11, 15) bindet, eine Zusammensetzung ist, die aus der Gruppe ausgewählt ist, welche besteht aus Copolymeren, die etwa 13 Gew.-% bis etwa 35 Gew.-% Vinylacetate mit von etwa 87 Gew.-% bis etwa 65 Gew.-% Ethylen enthalten, Copolymerzusammensetzungen von etwa 20 bis 30 Gew.-% Ethylacrylat mit von etwa 80 bis 70 Gew.-% Ethylen, Copolymerzusammensetzungen von etwa 20 bis 30 Gew.-% Isobutylacrylat mit von etwa 80 bis 70 Gew.-% Ethylen und chloriertes Polyethylen, das von etwa 25 bis 40 Gew.-% Chlor enthält, und Copolymere von Butadien-Styrol.

12. Verfahren nach Anspruch 8, 9 oder 10, dadurch gekennzeichnet, daß die Barrierenschicht (13) eine durchschnittliche Dicke von etwa 2 Prozent bis etwa 12 Prozent der Gesamtdicke des Gegenstands (10) hat.

13. Verfahren nach Anspruch 8, 9 oder 10, dadurch gekennzeichnet, daß die Barrierenschicht (13) eine durchschnittliche Dicke von etwa 3 Prozent bis etwa 10 Prozent der Gesamtdicke des Gegenstands (10) hat.

14. Verfahren nach Anspruch 8, 9 oder 10, dadurch gekennzeichnet, daß die Barrierenschicht (13) innerhalb der äußeren etwa ein viertel Gesamtdicke des Gegenstands (10) ist.

15. Verfahren nach den Ansprüchen 8 und 9, gekennzeichnet durch Abschrecken der geschmolzenen Ströme (30, 31) von thermoplastischem Material mit der Polyvinylidenchloridschicht (13) an ihrer äußeren Oberfläche in der Nähe der Polyvinylidenschicht (13), um weiter den Abbau des Polyvinylidenchlorids und die Bildung von eingeschlossenen Einlagerungen in dem resultierenden rohrförmigen Gegenstand (10) zu vermindern.

## Revendications

1. Article tubulaire à paroi épaisse non flexible (10) qui peut être orienté biaxialement en un récipient (35), possédant une faible perméabilité au gaz et comportant au moins trois couches de polymère (11, 13, 15, 16, 17) dont au moins une est une couche de polymère intermédiaire constituant une couche de barrière (13), ledit article (10) étant formé par coextrusion simultanée desdites couches de polymère (11, 13, 15, 16, 17) ensemble sous la forme d'une série de flux à l'état fondu (30, 31), ladite couche de barrière (13) étant située dans la région extérieure qui va de 1% à 33% de l'épaisseur totale dudit article (10) et ayant une épaisseur moyenne comprise entre 1% environ et 20% environ de l'épaisseur totale dudit article (10), caractérisé en ce que ladite couche de barrière (13) est coextrudée avec au moins une couche adhésive adjacente (12, 14) liée conjointement avec elle, pour procurer une diminution nette du volume relatif d'inclusions emprisonnées pour une longueur donnée.

2. Article tubulaire (10) suivant la revendication 1, caractérisé en ce que ladite couche de barrière (13) est choisie dans le groupe comprenant le chlorure de polyvinylidène, des copolymères de chlorure de polyvinylidène, le poly(alcool vinylique-co-éthylène) et des polymères contenant un acrylonitrile.

3. Article tubulaire (10) suivant la revendication 1 ou 2, caractérisé en ce que lesdites couches de polymère (11, 15, 16, 17) autres que ladite couche de barrière (13) sont des polymères choisis dans le groupe comprenant les polyoléfines, les polystyrènes et les polyesters.

4. Article tubulaire (10) suivant les revendications 1 à 3, caractérisé en ce que ladite couche adhésive (12, 14) liant une couche de barrière en chlorure de polyvinylidène (13) à une couche de polypropylène (11, 15) est une composition choisie dans le groupe comprenant des copolymères contenant de 13% environ en poids à 35% environ en poids d'acétate de vinyle et de 87% environ en poids à 65% environ en poids d'éthylène, des compositions de copolymères contenant de 20 à 30% environ en poids d'éthyl acrylate et de 80 à 70% environ en poids d'éthylène, des compositions de copolymères contenant de 20 à 30% environ poids d'isobutyl acrylate et de 80 à 70% environ en poids d'éthylène et du polyéthylène chloré contenant de 25 à 40% environ en poids de chlore et des copolymères de butadiène-styrène.

5. Article tubulaire (10) suivant la revendication 1, 2 ou 3, caractérisé en ce que ladite couche de barrière (13) a une épaisseur moyenne de 2% environ à 12% environ de l'épaisseur totale de l'article (10).

6. Article tubulaire (10) suivant la revendication 1, 2 ou 3, caractérisé en ce que ladite couche de barrière (13) a une épaisseur moyenne de 3% environ à 10% environ de l'épaisseur totale de l'article (10).

7. Article tubulaire (10) suivant la revendication 1, 2 ou 3, caractérisé en ce que ladite couche de barrière (13) est située dans le quart extérieur environ de l'épaisseur totale de l'article (10).

8. Procédé de fabrication d'un article tubulaire à paroi épaisse non flexible (10) qui peut être orienté biaxialement en un récipient (35), possédant une faible perméabilité au gaz et comportant au moins trois couches de polymère (11, 13, 15, 16, 17) dont au moins une est une couche intermédiaire de polymère constituant une couche de barrière (13), ledit article (10) étant formé par coextrusion simultanée desdites couches de polymère (11, 13, 15, 16, 17) ensemble sous la forme d'une série de flux à l'état fondu (30, 31), ladite couche de barrière (13) étant située dans la région extérieure représentant de 1% à 33% de l'épaisseur totale dudit article (10) et ayant une épaisseur moyenne comprise entre 1% environ et 20% environ de l'épaisseur totale dudit article (10), caractérisé en ce que ladite couche de barrière (13) est coextrudée avec au moins une couche adhésive adjacente (12, 14) liée conjointement à elle, pour procurer une diminution nette du volume relatif d'inclusions emprisonnées pour une longueur donnée.

9. Procédé suivant la revendication 8, caractérisé en ce que ladite couche de barrière (13) est choisie dans le groupe comprenant le chlorure de polyvinylidène, des copolymères de chlorure de polyvinylidène, du poly(alcool vinylique-co-éthylène) et des polymères contenant de l'acrylonitrile.

10. Procédé suivant la revendication 8 ou 9, caractérisé en ce que lesdites couches de polymère (11, 15, 16, 17) autres que ladite couche de barrière (13) sont des polymères choisis dans le groupe comprenant des polyoléfines, des polystyrènes et des polyesters.

11. Procédé suivant les revendications 8 à 10, caractérisé en ce que ladite couche adhésive (12, 14) liant une couche de barrière en chlorure de polyvinylidène (13) à une couche de polypropylène (11, 15) est une composition choisie dans le groupe composé de copolymères contenant de 13% environ en poids à 35% environ en poids d'acétate de vinyle et de 87% environ en poids à 65% environ en poids d'éthylène, de compositions de copolymères contenant de 20 à 30% environ en poids d'éthyl acrylate et de 80 à 70% environ en poids d'éthylène, de compositions de copolymères contenant de 20 à 30% environ en poids d'isobutyl acrylate et de 80 à 70% environ en poids d'éthylène et de polyéthylène chloré contenant de 25 à 40% environ en poids de chlore, et de copolymères de butadiène-styrène.

12. Procédé suivant la revendication 8, 9 ou 10, caractérisé en ce que ladite couche de barrière (13) a une épaisseur moyenne de 2% environ à 12% environ de l'épaisseur totale de l'article (10).

13. Procédé suivant la revendication 8, 9 ou 10, caractérisé en ce que ladite couche de barrière (13) a une épaisseur moyenne de 3% environ à 10% environ de l'épaisseur totale de l'article (10).

14. Procédé suivant la revendication 8, 9 ou 10, caractérisé en ce que ladite couche de barrière (13) est située dans le quart extérieur environ de l'épaisseur totale de l'article (10).

15. Procédé suivant les revendications 8 et 9, caractérisé en ce qu'il comprend la trempe desdits flux à l'état fondu (30, 31) de matière thermoplastique avec ladite couche de chlorure de polyvinylidène (13), à leur surface extérieure près de ladite couche de polyvinylidène (13), afin de réduire encore la dégradation du chlorure de polyvinylidène et la formation d'inclusions emprisonnées dans l'article tubulaire résultant (10).

FIG. 1

FIG. 2

FIG. 3

FIG. 5

FIG. 6

FIG. 4